# DEMANDE DE BREVET EUROPEEN

(11) **EP 0 955 758 A1**
(43) Date de publication de la demande: **10.11.1999**
(21) Numéro de dépôt: 99400962.9
(22) Date de dépôt: 20.04.1999
(51) Int. Cl.: H04L 29/06

(54) **Procédé et dispositif d'interconnexion sécurisée entre des ordinateurs organisés en réseau**

(30) Priorité: 30.04.1998 FR 9805474
(71) Demandeur: BULL S.A., 78430 Louveciennes (FR)
(72) Inventeur: Vittel, Michel, 38210 Fures (FR)

(57) **Abrégé**

L'invention a pour objet un procédé d'interconnexion sécurisée entre des ordinateurs organisés en réseau, consistant à contrôler et filtrer le flux d'informations échangées entre les ordinateurs via la couche de communication IP (6), en fonction de règles de filtrage déterminées. Le procédé consiste à piloter un module de filtrage IP (3) résidant au niveau de la couche de communication IP (6) dans l'espace noyau (5), à partir de modules de traitement (2i) résidant dans l'espace utilisateur (4) et dédiés respectivement à des tâches déterminées.

Les applications vont notamment à la sécurisations des connexions entre un réseau privé et le réseau Internet ou entre des sous-réseaux privés dans un environnement intranet.

## Description

La présente invention concerne un procédé d'interconnexion sécurisée entre des réseaux privés et publics permettant, mais non exclusivement, de supporter des services utilisant une allocation dynamique de ports, services appelés par la suite "services dynamiques", et l'interaction avec l'environnement global de sécurité du système d'information.

L'invention concerne également un dispositif d'interconnexion sécurisée pour la mise en oeuvre du procédé selon l'invention, et un réseau comportant un tel dispositif.

L'invention se rapporte au domaine des interconnexions entre réseaux de nature et confidentialité différentes et s'applique plus particulièrement au domaine des gardes-barrières, appelé également "firewall" en terminologie anglo-saxonne, et qui sont des produits de sécurité chargés de contrôler et filtrer les accès réseaux.

La description qui suit s'intéresse plus particulièrement mais non exclusivement à la sécurisation des connexions entre un ou plusieurs réseaux privés avec le réseau Internet dénommé ci-après Internet. Elle s'applique également à la sécurisation des connexions entre un ou plusieurs sous-réseaux notamment dans un environnement intranet.

De la même façon, la description s'intéresse plus particulièrement mais non exclusivement à l'environnement de programmation en langage Java qui est un langage de programmation orienté objet développé par Sun Microsystems et capable de fonctionner sur n'importe quel type d'ordinateur.

Ce qui caractérise Internet, c'est l'absence d'organisme de contrôle. A l'inverse de ce qui se passe pour les autres modes de communication comme le téléphone ou le courrier, Internet n'est pas unitaire mais est composé d'une juxtaposition de réseaux et de différents intervenants.

Dans un but de clarté, il est utile de rappeler quelques définitions utilisées dans la description qui suit.

Le terme "système" définit une unité, une machine de traitement de données informatiques ou de façon plus générale, une plate-forme, disposant d'un système d'exploitation, ou OS abréviations anglo-saxonnes pour Operating System.

Le terme "protocole" désigne toute information de service supportée par les couches de communication de niveau inférieur ou égal à 4 telles que définies dans le modèle OSI, abréviations anglo-saxonnes pour Open System Interconnection, qui organise les différentes fonctions nécessaires pour réaliser des échanges entre systèmes de communication en sept sous-ensembles fonctionnels appelés couches de communication.

Parmi les protocoles les plus connus, on distingue entre autre, le protocole de communication numérique TCP/IP, abréviations anglo-saxonnes pour Transmission Control Protocol over Internet Protocol, entre Client et Serveur.

Le terme "donnée", désigne toute information produite ou exploitée par une couche de niveau supérieur ou égal à 5 du modèle OSI.

Un dispositif d'interconnexion manipule généralement des données applicatives qui sont : des informations transmises dans la partie réservée aux données dans les datagrammes TCP/IP, des en-têtes TCP/IP, etc.

Les systèmes hébergent des serveurs. Ceux-ci sont définis de façon générale comme étant un logiciel ou une entité logicielle, par exemple, un logiciel de transfert de fichier.

La transmission des données est possible sur Internet grâce au protocole TCP/IP, valable pour tous les réseaux.

La plupart des grandes entreprises internationales communiquent entre elles via un réseau étendu. La sécurité d'un tel réseau est un élément important pour l'entreprise.

Ainsi, les réseaux locaux qui composent le réseau étendu sont tous à l'intérieur d'une barrière de sécurité, ou garde-barrière, et qui est matérialisée par exemple par un ordinateur dédié qui contrôle l'accès aux différents ordinateurs du réseau étendu.

Les gardes-barrières sont disposés à des points d'interface entre deux réseaux ou plus et ont la charge de vérifier les échanges d'un réseau vers un autre.

L'accès est autorisé ou non en fonction du caractère confidentiel ou public des serveurs, informations ou données que recherche le demandeur d'accès. Il est bien évident que dans ce cas la confidentialité est également respectée et que des informations circulant à l'intérieur d'un réseau étendu de ce type sont protégées. Tous ces réseaux sont caractérisés par le fait qu'ils sont à accès contrôlé.

Mais il existe aussi une multitude de réseaux publiques qui ne sont pas à accès contrôlé et qui sont susceptibles d'être connectés au réseau étendu sécurisé.

La sécurité des informations transmises dépend de la sécurité de chacun des ordinateurs par lesquels ont transité les informations.

Les gardes-barrières sont en général bien adaptés aux services IP soit au niveau applicatif soit au niveau IP.

Cependant le filtrage des accès réseaux nécessite une capacité de filtrage suffisante au niveau de la couche de communication IP, ce qui exclut les gardes-barrières applicatifs.

La plupart des gardes-barrières ne sont pas adaptés à des services tels que ceux utilisant une allocation dynamique de ports, notamment dans le cas d'une négociation de port entre le client et le serveur pour ouvrir de nouvelles connexions, pour la répartition des connexions, le suivi des échanges, la gestion des erreurs, etc.

Les techniques liées à l'Internet et l'Intranet évoluent très rapidement. Les services bâtis au-dessus de la pile de communication TCP/IP sont à la fois de plus en plus nombreux et de plus en plus complexes. En particulier, l'utilisation de protocoles d'allocation dynamique dans lesquels les parties clientes et serveurs négocient l'ouverture de connexions secondaires sur des ports alloués dynamiquement sont de plus en plus fréquents, essentiellement pour des raisons de performance.

La prise en compte de ces connexions secondaires de façon maîtrisée et sûre, sans impact au niveau des performances du système, rapidement afin de répondre aux attentes des utilisateurs, nécessite l'utilisation de techniques nouvelles permettant le développement rapide et efficace d'une solution.

Par ailleurs, un garde-barrière devient de plus un élément d'une solution globale de sécurité, intégré dans un environnement applicatif de plus en plus riche. Il est donc nécessaire de permettre des interactions entre le garde-barrière et son environnement, et en particulier les applications, afin de pouvoir agir sur sa politique de sécurité, sans dégrader le niveau de sécurité de l'ensemble du système.

Ainsi, les gardes-barrières doivent être de plus en plus ouverts aux applications des tiers afin de compléter notamment leurs actions communes relatives à la sécurisations des échanges pour renforcer la lutte contre les intrusions, l'amélioration des systèmes anti-virus, etc.

Les gardes-barrières de l'art antérieur se divisent en deux familles principales : les gardes-barrières applicatifs et les gardes-barrières IP.

Les gardes-barrières applicatifs reposent sur l'utilisation de relais applicatifs dédiés à un service donné par exemple le service FTP, abréviations anglo-saxonnes pour File Transfert Protocol. Ils sont pénalisants en terme de performance et manquent généralement "d'intelligence" ou de souplesse pour répondre aux exigences actuelles d'autant plus quand ils sont dédiés à un environnement précis, en particulier à un système d'exploitation, une architecture de piles IP, etc.

Quand un nouveau service apparaît, il faut développer un nouveau relais par lequel passeront l'ensemble des connexions mises en jeu pour ce service.

Un autre inconvénient de ce type de solution est la pénalisation en terme de performance et en consommation des ressources système sur le garde-barrière. Ceci est principalement du au fait que des temps de commutation entre l'espace noyau, où réside la couche IP, et l'espace utilisateur, où réside le relais, sont rajoutés au temps de routage nécessaire pour passer d'un réseau à l'autre.

Les gardes-barrières IP connus, reposent sur un filtrage réalisé au niveau de la couche IP et sont localisés dans l'espace noyau. Quand apparaît un nouveau service, surtout s'il est dynamique, sa prise en compte nécessite une évolution du module assurant le filtrage lP. Cette évolution est du ressort du seul fournisseur du garde-barrière puisqu'elle elle nécessite une connaissance interne du module de filtrage utilisé. De plus, la prise en compte de fonctions additionnelles telles qu'une authentification supplémentaire des utilisateurs distants, autorisation, authentification unique, Single Sign On en terminologie anglo-saxonne, n'est pas réalisable strictement à l'intérieur de l'espace noyau et demande un traitement dans l'espace utilisateur.

Pour pallier à certains de ces inconvénients, une technique, connue notamment du document WO-A-97 00471, utilisent un langage propriétaire permettant l'écriture de règles de filtrage qui sont ensuite converties en jeux d'instructions définissant ainsi un langage d'inspection.

Un jeu d'instructions en langage d'inspection, spécifique à un service donné, est écrit et ensuite chargé dans des modules de filtrage IP, résidant dans l'espace noyau qui l'exécutent, indépendamment du système d'exploitation.

Cette solution a toutefois ses limites puisqu'un module de filtrage est dédié à un service déterminé. Il n'a pas de relations avec des applications de tiers et ne peut pas avoir de vision globale des connexions ou effectuer des traitements particuliers.

L'invention a notamment pour but de pallier les inconvénients précités en proposant un support dynamique rapide, sûr, économique, performant, ouvert, pour des services existants ou à venir, et destiné à s'adapter à des services de type dynamique tels qu'une négociation de ports entre le client et le serveur, une répartition des connexions, etc.

L'invention a pour premier objet un procédé d'interconnexion sécurisée entre des ordinateurs organisés en réseau, consistant à contrôler et filtrer le flux d'informations échangées entre les ordinateurs via la couche de communication IP, en fonction de règles de filtrage déterminées.

Le procédé consiste à piloter un module de filtrage résidant au niveau de la couche de communication IP dans l'espace noyau à partir de modules de traitement résidant dans l'espace utilisateur et dédiés respectivement à des tâches déterminées.

Selon une caractéristique, les modules sont aptes à modifier dynamiquement la configuration du module de filtrage en fonctions des informations reçues et en limitant les échanges de données envoyées par le module de filtrage à destination des modules de traitement

Selon une autre caractéristique, les modules de traitement sont par exemple mis en oeuvre à partir d'un langage portable et ouvert.

Selon une caractéristique, le procédé selon l'invention consiste à piloter le module de filtrage IP par les modules de traitement en réponse aux interactions avec des applicatifs externes pour réaliser des tâches déterminées.

Un traitement effectué par un module de traitement consiste par exemple à piloter le module de filtrage de manière à gérer l'échange des données au niveau de la couche IP une fois la connexion établie, en fonction de règles définies par le module de traitement.

Un deuxième objet de la présente invention, est un dispositif d'accès sécurisé pour la mise en oeuvre du procédé défini ci-dessus.

Le dispositif comporte :
- un module de filtrage IP résidant dans l'espace noyau et interceptant le trafic IP ;
- un module de distribution résidant dans l'espace utilisateur ; et
- une pluralité de modules de traitement dédiés respectivement à des tâches déterminées, résidant dans l'espace utilisateur ; le module de distribution et la pluralité de modules de traitement étant couplés au module de filtrage et coopérant entre eux de façon bidirectionnelles.

Un troisième objet de la présente invention, est un réseau privé d'ordinateurs à accès sécurisé, caractérisé en ce qu'il comporte au moins un dispositif tel que défini ci-dessus, disposé au point d'interface entre le réseau et au moins un premier réseau externe auquel il est connecté, notamment le réseau Internet.

Un quatrième objet de la présente invention, est un réseau privé d'ordinateurs à accès sécurisé, organisés en sous-réseaux, caractérisé en ce qu'il comporte au moins un dispositif tel que défini ci-dessus, disposé entre chaque sous-réseau du réseau privé, notamment un réseau intranet.

Les principaux avantages de la présente inventions sont en terme de sécurité de:
- permettre la prise en compte efficace des services dynamiques ;
- réaliser des modules de traitement dont le code peut être fourni pour analyse ;
- identifier et certifier les modules de traitement afin de garantir leur origine et leur intégrité ;
- réaliser des modules de traitement permettant d'intégrer le garde-barrière dans un environnement global de sécurité ; et
- permettre la pris en compte de contexte de sécurité lié à une application ou à un serveur précis pendant le lancement de cette application ou serveur.

Les principaux avantages sont en terme de performance de :
- permettre que le maximum possible de données soient commutées au niveau IP afin d'augmenter les performances du système et ce, tout en appliquant la politique de sécurité en vigueur ; et
- limiter la consommation de ressources système.

Les principaux avantages en terme d'ouverture sont de :
- permettre le développement de modules de traitement par des tiers par la définition des interfaces de pilotage du module de filtrage IP ;
- interfacer des applications de tiers via des modules de traitement ; et
- donner la possibilité de visibilité globale ou partielle des connexions contrôlées par le garde-barrière.

Enfin les principaux avantages en terme de réduction des coûts sont liés au fait que les modules de traitement peuvent être distribués comme tout composant logiciel en suivant les voies habituelles de distribution du marché, et l'écriture des modules de traitement dans un langage de grande portabilité tel que le langage JAVA.

Le module de filtrage IP est vu d'un module de traitement à travers une interface, ce qui permet l'indépendance des deux modules.

D'autres avantages et caractéristiques de la présente invention apparaîtront à la lecture de la description qui suit faite en référence aux figures annexées qui représentent :
- la figure 1, un schéma de principe d'une liaison sécurisée par le procédé selon l'invention entre deux réseaux, dans l'exemple de la figure, un réseau privé et un réseau public de type internet;
- la figure 2, un schéma de principe du procédé selon l'invention dans le mode dit de cohabitation ; et
- la figure 3, un schéma de principe du procédé selon l'invention dans le mode dit de configuration ;

Comme indiqué précédemment, l'invention exploite plus particulièrement le langage JAVA qui est aujourd'hui le langage le mieux adapté pour réaliser des composants logiciels de grande portabilité.

Un objectif de la présente invention, est de fournir un moyen de contrôle d'un module de filtrage à partir de l'espace utilisateur en utilisant un jeu de composants logiciels, appelés modules de traitement, en limitant au strict minimum le trafic des données récupérées du module de filtrage IP vers le dispositif de contrôle, afin de permettre une augmentation des performances du garde-barrière.

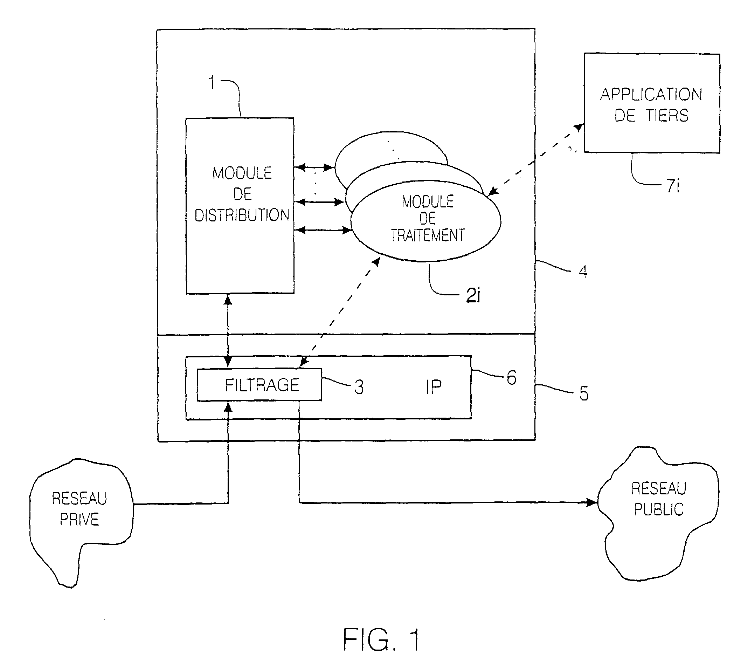

La figure 1 illustre schématiquement l'architecture d'un dispositif d'interconnexion sécurisée selon l'invention.

Elle comporte un module de distribution 1, une pluralité de modules de traitement 2i et un module de filtrage IP 3.

Le module de distribution 1 et les modules de traitement 2i résident dans l'espace utilisateur 4 et coopèrent avec le module de filtrage 3 résidant dans l'espace noyau 5.

Le module de filtrage 3 réside au niveau de la couche de communication IP 6 et fournit des données au module de distribution 1. Ces données sont relatives à un ou plusieurs services.

L'échange entre le module de filtrage 3 et le module de distribution 1 peut être assimilé à un échange du type client/serveur dans lequel le module de filtrage 3 est le client et le module de distribution 1 est le serveur.

Pour traiter des actions exécutées par le module de filtrage 3, le module de distribution 1 se comporte comme une interface vis à vis des modules de traitement 2i de manière à agir sur le module de filtrage 3.

En outre, le module de filtrage 3 peut supporter des traductions d'adresses dynamiques permettant ainsi de remplacer cette fonction qui est habituellement fournie par un relais applicatif.

Dans un premier temps, le module de distribution 1 masque la nature du module de filtrage 3 aux modules de traitement 2i ainsi que les éléments liés au système d'exploitation : la pile IP, etc.

Le module de distribution 1 peut être un module développé spécifiquement pour l'application garde-barrière ou être un composant résidant habituellement dans le système tel que le processus "inetd".

Un module de traitement 2i peut soit être spécifique à un service déterminé, soit réagir à un événement externe.

Les modules de traitement 2i sont matérialisés par des parties de logiciels qui sont responsables de l'exécution d'actions déterminées suivant des conditions déterminées.

Un module de traitement 2i est une partie de logiciel manipulant par exemple le langage de requête pour les bases de données SQL, abréviations anglo-saxonnes pour Structured Query Language, via le protocole SQL*Net.

Dans le cas où il est dédié à un service déterminé, le module de traitement 2i se comporte comme un relais applicatif mais avec des capacités bien supérieures qui sont dues à sa capacité à piloter le module de filtrage IP 3.

En effet, le module de traitement 2i est plus qu'un simple point de passage des connexions depuis le client et de celles crées pour assurer le relais vers le serveur avec une possibilité d'analyse du contenu. Il réalise cette tâche en pilotant en outre le module de filtrage IP 3.

L'apport du module de traitement par rapport à un relais applicatif est que le module de traitement modifie dynamiquement la configuration du module de filtrage IP en fonction des informations reçues.
Dans l'exemple d'un service dynamique, le module de traitement 2i peut décider de demander au module de filtrage IP 3 d'autoriser certaines connexions, en particulier les connexions secondaires sans que ces dernières transitent par lui.

Ces connexions sont donc gérées entièrement au niveau IP, ce qui augmente les performances du système.

Dans un autre type de traitement, le module de traitement 2i peut demander à être en copie des données échangées pour y effectuer des contrôles de contenu (anti-virus, type de fichier, etc.) et demander au module de filtrage IP de réserver l'émission de certains paquets en attendant la fin du contrôle.

Le module de traitement envoie alors au module de filtrage IP l'accord de transmission au moment adéquat et les données temporisées sont alors acheminées.

Les performances du système sont augmentées puisqu'une partie, parfois importante, des données a été transmise au serveur en parallèle, sans toutefois pouvoir être exploitable puisqu'incomplète.

Dans un deuxième mode de fonctionnement, un module de traitement 2i peut avoir une tâche précise, activée lorsque se produit un événement extérieur.

Dans ce cas, le module de traitement 2i agit sur le module de filtrage IP 3 en lui demandant d'effectuer certaines opérations telles que des modifications de configuration, de le mettre en copie des données échangées sur certaines connexions, de fermer certaines connexions, etc.

Les événements extérieurs peuvent être de façon non limitative :
- la mise à jour de la configuration du garde-barrière ;
- l'établissement d'un contexte de sécurité particulier pour une application ou un serveur;
- un audit ;
- une corrélation de trafic; ou
- une réaction à une attaque.

La réalisation des modules de traitement en JAVA permet une portabilité et une distribution immédiate des modules de traitement 2i, indépendamment des matériels et systèmes les hébergeant. Toutefois, l'utilisation d'un tel langage, bien que recommandée, n'est pas obligatoire.

Les modules de traitement 2i peuvent également permettre d'interfacer des applications de tiers 7i pour par exemple la détection d'attaques, la gestion de performance du réseau, etc.

Ils permettent ainsi de répercuter sur le garde-barrière et son module de filtrage IP 3 des actions déterminées.

Les références 2i ont été jusqu'à présent utilisées pour désigner les modules de traitement considérés dans leur généralité. Dans la suite de la description, les références 10 et 11 désigneront des modules spécifiques parmi les modules de traitement 2i, respectivement dans un mode dit de cohabitation et dans un mode dit de configuration.

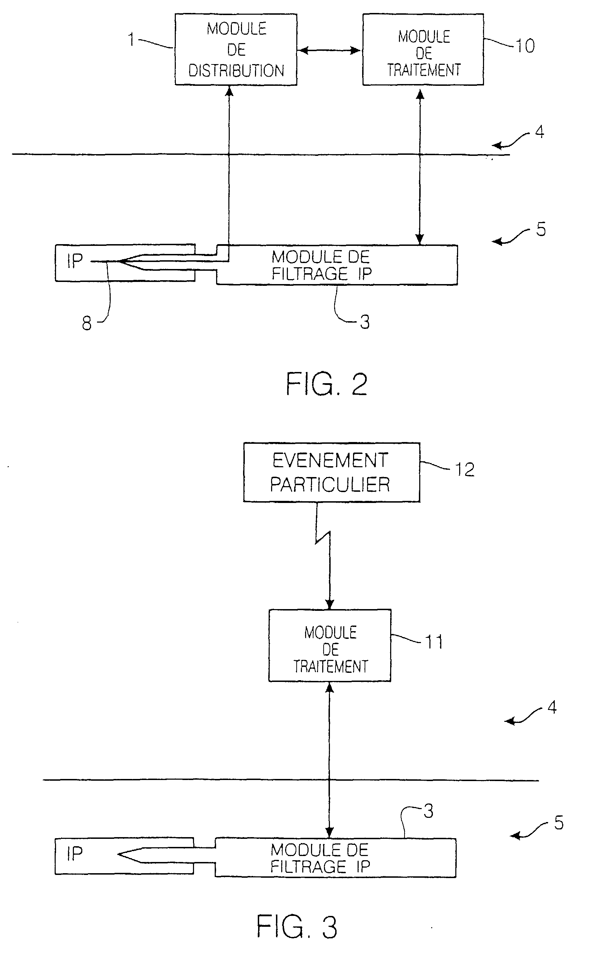

La figure 2 illustre schématiquement le principe de fonctionnement d'un garde-barrière selon l'invention dans le mode cohabitation.

Dans ce mode de fonctionnement, le module de filtrage IP 3 est à l'origine du traitement. Il capture un trafic IP déterminé et transmet toutes les informations disponibles destinées au module de distribution 1 en particulier, l'ensemble des données du datagramme.
Il fait suivre ensuite les données au module de distribution 1 chargé d'identifier le module de traitement 2i réellement en charge des contrôles. Une fois qu'un module de traitement 10 est identifié parmi les différents modules de traitement 2i, le module de distribution 1 lui transmet les données, voire la connexion elle-même afin que le module identifié 10 puisse piloter le module de filtrage 3.
Le mode cohabitation s'applique de façon très efficace pour les services dynamiques.

Le module identifié 10 est alors chargé de relayer le trafic initial vers le serveur fournissant le service demandé.

De même le module de traitement 10 peut décider que ce traitement soit alors complètement traité par le module de filtrage IP 3 afin d'obtenir de meilleures performances ou de continuer de le faire transiter par lui pour appliquer des contrôles tels que vérification du contenu des données.

La phase d'acceptation de la connexion peut se compléter de services additionnels comme dans le cas des relais applicatifs : authentification, autorisation, single sign on, etc.

Dans le cas des services dynamiques à négociation de port, le module de traitement 2i analyse les données échangées sur la connexion principale et pilote le module de filtrage IP 3 afin de permettre l'ouverture de connexions secondaires. II peut demander une copie des données de ces connexions secondaires, voire demander la fermeture de certaines connexions, par exemple, la fermeture des connexions secondaires en cas de rupture de la connexion principale.

Un module de traitement 2i peut demander à ce que les données d'une connexion passent seulement par lui pour effectuer certains traitements tels que l'analyse de contenu ou modification des données (chiffrement en particulier).

Plusieurs modules de traitement 2i pour un même service déterminé peuvent coexister à un moment déterminé pendant lequel plusieurs requêtes pour le même service sont reçues.

Là encore, l'utilisation du langage JAVA est particulièrement adaptée à cette fonctionnalité principalement pour des raisons de portabilité.

De même, des modules de traitement 2i différents peuvent cohabiter, au moment où plusieurs services doivent être traités.

Les modules de traitement 2i traitent les données reçues, par exemple en explorant les ports négociés, et peuvent entretenir une machine d'état pour établir des relations entre les événements reçus.

Les modules de traitement 2i sont responsables du traitement des données mais aussi de la commande du module de filtrage 3. Ils manipulent des indicateurs signalant au module de filtrage 3 que les données ne sont plus requises, les règles filtrées, etc.

Il est également possible de construire un ou plusieurs modules de traitement 2i ayant la responsabilité de plusieurs services ou plusieurs sortes de trafics.

Leur but est alors d'avoir une vue globale sur tout le trafic afin d'être capables de le commander tout en le contrôlant, c'est à dire en vérifiant la validité du trafic.

Une application typique est la détection de tentatives d'intrusion dans laquelle un balayage de la totalité ou d'une partie du trafic peut être effectué par un module de traitement 2i qui peut modifier le module de filtrage 3 pour empêcher les attaques. Ce qui peut se manifester par le refus d'un trafic provenant d'un système donné, la génération d'alarmes, etc.

Le traitement de services dynamiques est important en terme de sécurité. Les services doivent être supportés de façon restrictive, c'est à dire que le traitement doit interdire l'exécution de services allant au-delà de ce qui est autorisé, par exemple, des connexions à un grand nombre de ports intégrant un port non préalablement connu.

Des services dynamiques connus sont typiquement les services FTP, RPC : abréviations anglo-saxonnes pour Remote Procedure Call (NFS, NIS respectivement abréviations anglo-saxonnes pour Network File System et Network Information System), SQL*Net, llOP : abréviations anglo-saxonnes pour Internet Inter-Object request broker Protocol , SAP : abréviations allemandes pour SystemAnalyse und Programmentwicklung, etc.

En effet, dans ce type d'application, il est courant qu'une partie du trafic qui est envoyée vers l'ensemble constitué, dans l'invention, du module de distribution 1 et du module de traitement 2i, soit la plupart du temps limitée à un service d'initialisation ou à des étapes spécifiques à l'intérieur du service. Tous les autres trafics passent seulement par le module de filtrage 3, c'est à dire sans commutation des données entre l'espace utilisateur 4 et l'espace noyau 5.

Un dispositif selon l'invention peut s'appliquer par exemple au service Telnet qui est un service supporté par la cinquième couche du modèle OSI, c'est à dire la couche session.

Dans cette application, il exécute les module de traitement 2i seulement quand la connexion Telnet est ouverte, par exemple pour la vérification du distribution ou pour une demande d'identification de l'utilisateur, puis toutes les données seront échangées au niveau de la couche IP.

Le langage JAVA étant un langage de grande portabilité et indépendant du système d'exploitation, les modules de traitement 2i, et éventuellement le module de distribution 1, écrit en langage JAVA sont alors également d'une grande portabilité.

Ainsi, des module de traitement 2i peuvent être développées sans aucune contrainte ni connaissance particulière du système d'exploitation hébergeant le dispositif selon l'invention.

Dans le mode configuration, illustré à la figure 3, c'est un module de traitement spécifique 11 qui entreprend une série d'actions sur le module de filtrage IP 3 à partir du moment où il est activé à la suite d'un événement extérieur 12.

Un événement extérieur peut être de plusieurs natures. Il peut résulter en particulier de la mise à jour globale de la configuration du garde-barrière, de l'analyse de données d'audit conduisant à une mise à jour de la configuration du garde-barrière, en un besoin de surveillance du trafic, de la mise en place de la politique de sécurité associée à une application qui démarre quelque part sur le réseau protégé par le garde-barrière.

Cette application a, par ce biais, le moyen de préciser les protections réseau qu'elle souhaite.

A titre d'exemple, un module de traitement 10 a pour tâche d'effectuer de la corrélation de trafic. Pour cela, il peut être amené à demander une copie des données échangées sur une ou plusieurs connexions. La copie signifie que les données sont acheminées, par le module de filtrage 3, au niveau IP, entre le client et le serveur, et sont dupliquées vers le module de traitement 10. Il n'y a donc pas d'incidence de performance entre le client et le serveur.

Pour accomplir sa tâche, le module de traitement 10 peut demander au module de filtrage IP 3 de lui faire parvenir une copie des données sur de nouvelles connexions et effectuer ainsi le pilotage du module de filtrage IP 3.

Par ailleurs, la mise à jour régulière du dispositif selon l'invention, est requise, par exemple dès que de nouveaux services sont présents, quand des services propriétaires n'ont pas été pris en compte pour des clients, etc.

L'administrateur de base de données n'a pas à se soucier de l'attribution des différents modules de traitement 2i suivant les différents types de gardes-barrières. Les mises à jour et attributions sont réalisées automatiquement.

Pour un distributeur de gardes-barrières ou un distributeur externe, l'opportunité de développer un dispositif selon l'invention compatible avec de multiple plates-formes revêt un grand intérêt. C'est d'ailleurs une des principales causes du succès de Windows de Micro-Soft et du langage de programmation JAVA.

Les modules de traitement 2i peuvent être développées soit par un concepteur de gardes-barrières, soit par des utilisateurs. Elles peuvent permettre d'intégrer des applications utilisateur dans un garde-barrière sans avoir à modifier ni l'application, ni le garde-barrière lui-même.

Du fait de la définition d'interfaces publiques entre le module de distribution 1, le module de filtrage IP 3, et les module de traitement 2i, le développement d'un module de traitement 2i peut être réalisé par tout homme de l'art.

Aucune exigence au niveau du garde-barrière n'est requise pour mettre en oeuvre des modules de traitement 2i à part bien sûr de disposer d'un module de filtrage IP susceptible d'être piloté.

Quand une connexion est établie, les modules de traitement 2i traitent les informations et pilotent le module de filtrage IP 3 comme dans le mode cohabitation précédemment décrit.

## Revendications

1. Procédé d'interconnexion sécurisée entre des ordinateurs organisés en réseau, consistant à contrôler et filtrer le flux d'informations échangées entre les ordinateurs via la couche de communication IP (6), en fonction de règles de filtrage déterminées, caractérisé en ce qu'il consiste à piloter un module de filtrage (3) résidant au niveau de la couche de communication IP (6) dans l'espace noyau (5), à partir de modules de traitement (2i) résidant dans l'espace utilisateur (4) et dédiés respectivement à des tâches déterminées.

2. Procédé selon la revendication 1, caractérisé en ce que les modules (2i) sont aptes à modifier dynamiquement la configuration du module de filtrage (3) en fonctions des informations reçues et en limitant les échanges de données envoyées par le module de filtrage (3) à destination des modules de traitement (2i).

3. Procédé selon l'une quelconque des revendications 1 et 2, caractérisé en ce que les modules de traitement (2i) sont mis en oeuvre à partir d'un langage portable et ouvert.

4. Procédé selon l'une quelconque des revendications 1 à 3, caractérisé en ce qu'il consiste à piloter le module de filtrage IP (3) par les modules de traitement (2i) en réponse aux interactions avec des applicatifs externes (7i) pour réaliser des tâches déterminées.

5. Procédé selon l'une quelconque des revendications 1 à 4, caractérisé en ce qu'un traitement effectué par un module de traitement (11) consiste à piloter le module de filtrage (3) de manière à gérer l'échange des données au niveau de la couche IP (6) une fois la connexion établie, en fonction de règles définies par le module de traitement (11).

6. Dispositif d'accès sécurisé pour la mise en oeuvre du procédé selon l'une quelconque des revendications 1 à 5, caractérisé en ce qu'il comporte :
- un module de filtrage IP (3) résidant dans l'espace noyau (5) et interceptant le trafic IP (8) ;
- un module de distribution (1) résidant dans l'espace utilisateur (4) ; et
- une pluralité de modules de traitement (2i) dédiés respectivement à des tâches déterminées, résidant dans l'espace utilisateur (4) ; le module de distribution (1) et la pluralité de modules de traitement (2i) étant couplés au module de filtrage (3) et coopérant entre eux de façon bidirectionnelles.

7. Réseau privé d'ordinateurs à accès sécurisé, caractérisé en ce qu'il comporte au moins un dispositif selon la revendication 6, disposé au point d'interface entre le réseau et au moins un premier réseau externe auquel il est connecté, notamment le réseau Internet.

8. Réseau privé d'ordinateurs à accès sécurisé, organisés en sous-réseaux, caractérisé en ce qu'il comporte au moins un dispositif selon la revendication 6, disposé entre chaque sous-réseau du réseau privé, notamment un réseau intranet.
